# EUROPEAN PATENT APPLICATION

(11) **EP 4 368 569 A1**
(43) Date of publication of application: **15.05.2024**
(21) Application number: 21963804.6
(22) Date of filing: 29.11.2021
(51) Int. Cl.: C01B 13/02, C25B 9/00, C25B 1/044, C25B 1/04, B01D 53/047

(54) **HYDROGEN-OXYGEN MIXED GAS PREPARATION DEVICE CAPABLE OF ADJUSTING HYDROGEN CONTENT AND METHOD THEREFOR**

(30) Priority: 13.11.2021 CN 202111343342; 13.11.2021 CN 202122774026 U
(71) Applicant: Dalian Institute of Chemical Physics, Chinese Academy of Sciences, Dalian, Liaoning 116023 (CN)
(72) Inventor: DENG, Dehui, Dalian, Liaoning 116023 (CN); LIU, Yanting, Dalian, Liaoning 116023 (CN); SHU, Yunmao, Dalian, Liaoning 116023 (CN); BO, Xin, Dalian, Liaoning 116023 (CN)
(74) Representative: Proi World Intellectual Property GmbH
(86) International application number: PCT/CN2021/133945
(87) International publication number: WO 2023/082362

(57) **Abstract**

The present invention provides an oxyhydrogen preparation device capable of adjusting hydrogen content and a using method thereof. The device comprises a housing for accommodating an oxygen production device, a hydrogen production device, a control module (14), and a power supply module (19), wherein the power supply module (19) is configured to supply power to each said device; the oxygen production device is configured to separate oxygen from air and store the oxygen for backup supply; the hydrogen production device is configured to produce hydrogen or oxyhydrogen for backup supply based on the principle of water electrolysis; the control module (14) is configured to control and adjust the oxygen flow, detect the oxygen concentration, and adjust the flow of the oxyhydrogen and the hydrogen content to a preset range; and the oxygen produced by the oxygen production device converges with the hydrogen or the oxyhydrogen produced by the hydrogen production to a gas outlet (17) of the oxyhydrogen gas preparation device through a pipeline, and then discharged after humidification or discharged directly. Further disclosed is a using method of the device. The advantages such as long service life, adjustable hydrogen content, adjustable oxyhydrogen flow are achieved.

## Description

### TECHNICAL FIELD

The present invention relates to the technical field of oxyhydrogen preparation, and in particular to an oxyhydrogen preparation device capable of adjusting hydrogen content and a using method thereof.

### BACKGROUND ART

Oxygen plays a key role in human metabolism, and hypoxia can cause diseases such as upper respiratory tract infection, insomnia, pulmonary edema, and cerebral edema. In recent years, hydrogen has been widely applied in the fields of medical treatment, health care and health preservation, and people have paid increasing attention to hydrogen-containing gas and hydrogen-containing liquid products. By utilizing the biological effects of hydrogen, such as anti-oxidation, anti-inflammation, anti-apoptosis and cell repair, the effect of improving the physical condition and preventing and treating diseases can be achieved. Many research results show that hydrogen can selectively scavenge malignant free radicals in the body, has health effects such as immune regulation and metabolic regulation, and can be used for auxiliary treatment of cerebral ischemia, senile dementia, lung injury, and kidney injury, as well as for tumor treatment and sleep improvement. In addition, hydrogen has cosmetic effects such as beauty and anti-aging, anti-ultraviolet damage, skin tissue repair, etc.

At present, most of the hydrogen generators on the market or hydrogen-oxygen generators in medical institutions have complex structures, and can only achieve the function of preparing high-purity hydrogen or the oxyhydrogen with a fixed hydrogen-oxygen ratio (hydrogen/oxygen = 66.6%: 33.3%). However, there has been no report on an oxyhydrogen preparation device capable of adjusting hydrogen content.

Therefore, it is necessary to provide a novel oxyhydrogen preparation device for medical health care and for a user to adjust the hydrogen content to solve the deficiencies in the prior art.

### SUMMARY

To solve the technical problems of the existing hydrogen and oxyhydrogen production equipment including the complex structure and nonadjustable hydrogen-oxygen ratio, the present invention provides an oxyhydrogen preparation device capable of adjusting hydrogen content and a using method thereof. The present invention mainly applies the process for producing oxygen by air separation to the hydrogen production technology by electrolysis of water, by means of reasonable structural design and optimization of the device, multi-mode supply is realized by controlling and adjusting the gas flow and hydrogen content. The present invention has the advantages of compact structure, long service life, adjustable oxyhydrogen output, and adjustable hydrogen content.

The technical solutions employed by the present invention are as follows:
The present invention provides an oxyhydrogen preparation device capable of adjusting hydrogen content, including a housing configured to accommodate an oxygen production device, a hydrogen production device, a control module, and a power supply module, wherein the power supply module is configured to supply power to each said device.

The oxygen production device is configured to separate oxygen from air and store oxygen for backup supply.

The hydrogen production device is configured to produce hydrogen or oxyhydrogen for backup supply based on the principle of water electrolysis.

The control module is configured to control and adjust a flow of the oxygen, detect a concentration of the oxygen and adjust a flow of the oxyhydrogen and a hydrogen content to a preset range.

The oxygen produced by the oxygen production device converges with the hydrogen or the oxyhydrogen produced by the hydrogen production device to a gas outlet of the oxyhydrogen preparation device through a pipeline, and then discharged after humidification or directly discharged.

Further, the oxygen production device includes an air compressor, a condenser connected with the air compressor, an adsorption device connected with the condenser and configured to separate the oxygen from the air, a gas storage tank connected with the adsorption device and configured to store oxygen, and a silencing device connected with a pipeline for outputting other gases in the air.

The working principle of the oxygen production device is that based on the pressure swing adsorption principle. Zeolite molecular sieves are used as an adsorbent, and nitrogen is heavily adsorbed by the zeolite molecular sieves since the selective adsorption characteristics of zeolite molecular sieves; oxygen is enriched in the gas phase, and nitrogen-oxygen separation is realized under the action of pressure swing adsorption. The oxygen production device adopts two adsorption towers, one tower for nitrogen adsorption and oxygen production, and the other tower for desorption and regeneration. The control module controls the opening and closing of the combined air valve, allowing the two towers to cycle alternately and continuously to produce high-quality oxygen.

Further, the adsorption device is an adsorption tower group including at least two adsorption towers, a combined air valve is disposed between the condenser and the adsorption tower group to control gas paths, and the towers of the adsorption tower group circularly and alternately operate based on the pressure swing adsorption principle, so as to separate oxygen from the air. A heat dissipater is further disposed on one side of the condenser, which is configured to dissipate heat from the condenser.

Further, the hydrogen production device includes an electrolytic cell and a catalyst electrode. A gas outlet of hydrogen or oxyhydrogen is disposed on the electrolytic cell, a gas-liquid separator is disposed at the gas outlet of hydrogen or oxyhydrogen, and the produced hydrogen or oxyhydrogen flows into a gas outlet pipeline communicated with the oxygen outlet pipe after being subjected to multi-stage filtration and drying.

Preferably, the dried oxyhydrogen enters a confluence pipeline after passing through a flame arrester, which can effectively ensure the safety of the device.

Further, the preset range of the flow of the oxyhydrogen is of 0.03-7 L/min, of which the hydrogen content accounts for 0% -100%. When the oxygen production device stops working, open the hydrogen outlet of the hydrogen production device, and a hydrogen supply with a concentration of nearly 100% can be realized; or when the oxygen production device stops working, open the oxyhydrogen outlet of the hydrogen production device, and an oxyhydrogen supply with 66.6% of hydrogen and 33.3% of oxygen can be realized; or only start the oxygen production device to realize a 100% oxygen supply; or start both of the oxygen production device and the hydrogen production device at the same time, and adjust the hydrogen content to a required range. It should be noted that when the hydrogen content exceeds the explosion limit, in order to further ensure the safety of the device, a flame arrester is further disposed between the confluence part and the gas outlet.

Further, the housing includes a main housing, and an upper cover and a bottom cover are respectively disposed at an upper end and a lower end of the main housing. The upper cover is provided with a water inlet for adding water into the hydrogen production device, a sealing cover is disposed on the water inlet, and the upper cover is further inside provided with a humidification bottle.

Further, the upper cover is further provided with a control panel display screen and a flow meter display window.

Further, the bottom cover is provided with multiple rows of gas inlet holes, and the bottom cover is further provided with casters convenient to move.

Further, a bottom of the humidification bottle is further provided with a lamp plate, and a part, corresponding to a side of the humidification bottle, of the upper cover is provided with a visual window.

The present invention further discloses a using method of the oxyhydrogen preparation device capable of adjusting hydrogen content. The using method includes adding water into the hydrogen production device, switching on the oxyhydrogen preparation device to start the oxygen production device and the hydrogen production device to operate, the air entering the main housing from the gas inlet holes on the bottom cover of the housing, followed by entering the air compressor and then entering the combined air valve through the condenser, then entering the absorption tower group for pressure swing adsorption, after being separated from other gases in the air, oxygen entering the gas storage tank, which converges, after being subjected to flow adjustment and concentration detection, with the hydrogen or oxyhydrogen produced by electrolysis water in the hydrogen production device to the gas outlet pipeline, and then is discharged after being humidified by the humidification bottle or directly discharged; and discharging other gases in the air after passing through the silencing device.

Compared with the prior art, the present invention has the following advantages:
1. The oxygen production device provided by the present invention can separate the oxygen from other gases in the air based on the pressure swing absorption principle, and obtain high-purity oxygen for backup supply.
2. The hydrogen production device provided by the present invention generates hydrogen or oxyhydrogen based on the principle of water electrolysis, and obtains pure hydrogen or oxyhydrogen after being subjected to multi-stage filtration and drying for backup supply.
3. The oxyhydrogen production device capable of adjusting hydrogen content provided by the present invention can adjust the flow of the produced oxyhydrogen and the hydrogen content to a preset range according to the user's needs, which is safe, reliable, convenient, and fast, and can realize multi-mode supply.

To sum up, the oxyhydrogen preparation device capable of adjusting hydrogen content provided by the present invention has a compact structure, adjustable oxyhydrogen output, adjustable hydrogen content, and long service life.

Based on the above reasons, the present invention can be widely promoted in field of hydrogen and oxygen production.

### BRIEF DESCRIPTION OF THE DRAWINGS

In order to more clearly describe the technical solutions in the examples of the present invention or in the prior art, a brief introduction to the accompanying drawings required for the description of the examples or the prior art will be made below. Apparently, the accompanying drawings in the following description are merely some embodiments of the present invention, and those of ordinary skill in the art would also be able to derive other drawings from these drawings without making creative efforts.
FIG. 1 is an exploded view of the structure of an oxyhydrogen preparation device capable of adjusting hydrogen content of the present invention.
FIG. 2 is a usage flow diagram of an oxyhydrogen preparation device capable of adjusting hydrogen content of the present invention.

In the figures: 1. main housing, 2. upper cover, 3. bottom cover, 4. caster, 5. first filter, 6. air compressor, 7. condenser, 8. combined air valve, 9. absorption tower group, 10. gas storage tank, 11. second filter, 12. flow meter, 13. display screen, 14. control module, 15. check valve, 16. T-pipe, 17. gas outlet, 18. humidification bottle, 19. power supply module, 20. electrolytic cell, 21. electrolytic stack, 22. gas-liquid separator, 23. flame arrester, 24. gas inlet hole; 25. lamp plate; 26. water inlet, 27. sealing cover, 28. muffler, 29. flow regulating valve, 30. heat dissipater.

### DETAILED DESCRIPTION OF THE EMBODIMENTS

It should be noted that, in the case of no conflicts, the embodiments and the features in the embodiments of the present invention can be combined mutually. The present invention will be described in detail below with reference to the accompanying drawings and the embodiments.

To make the objectives, technical solutions and advantages of embodiments of the present disclosure more obvious, the technical solutions of the present disclosure will be clearly and completely described below in conjunction with the accompanying drawings in the embodiments of the present disclosure, and obviously, the described embodiments are some, rather than all of the embodiments of the present disclosure. The following description of at least one example embodiment is merely illustrative in nature, and is in no way intended to limit the present disclosure, an application or use thereof. Based on the embodiments of the present disclosure, all other embodiments acquired by those ordinary skilled in the art without making creative efforts fall within the scope of protection of the present disclosure.

It should be noted that the terms used herein are only intended to describe specific embodiments and are not intended to limit the example embodiments of the present disclosure. As used herein, unless indicated obviously in the context, a singular form is also intended to include a plural form. In addition, it should also be understood that the terms "include" and/or "comprise" used in this specification indicate features, steps, operations, devices, components and/or their combinations.

Except as otherwise specifically set forth, the relative arrangement of components and steps, numerical expressions and numerical values set forth in these embodiments do not limit the scope of the present invention. In addition, it should be clear that, for ease of description, sizes of the various components shown in the accompanying drawings are not drawn according to actual proportional relationships. Technologies, methods, and devices known to those of ordinary skill in the relevant fields may not be discussed in detail, but where appropriate, the technologies, methods, and devices should be considered as a part of the authorization specification. In all the examples shown and discussed herein, any specific value should be interpreted as merely example rather than limiting. Therefore, other examples of the example embodiments may have different values. It should be noted that similar reference signs and letters represent similar items in the accompanying drawings below. Therefore, once an item is defined in one accompanying drawing, the item does not need to be further discussed in a subsequent accompanying drawing.

In the description of the present invention, it should be noted that orientations or position relationships indicated by orientation terms "front, rear, upper, lower, left, and right", "transverse, vertical, perpendicular, and horizontal", "top and bottom", and the like are usually based on orientations or position relationships shown in the accompanying drawings, and these terms are only used to facilitate description of the present invention and simplification of the description. In the absence of description to the contrary, these orientation terms do not indicate or imply that the apparatus or element referred to must have a specific orientation or be constructed and operated in a specific orientation, and therefore cannot be understood as a limitation on the protection scope of the present invention: orientation words "inner and outer" refer to the inside and outside relative to the contour of each component.

For ease of description, spatially relative terms such as "on", "over", "on the upper surface", and "above" can be used here, to describe a spatial positional relationship between one device or feature and another device or feature shown in the figures. It should be understood that the spatially relative terms are intended to include different orientations in use or operation other than the orientation of the device described in the figure. For example, if the device in the figure is inverted, the device described as "above another device or structure" or "on another device or structure" is then be positioned as being "below another device or structure" or "beneath a device or structure". Therefore, the exemplary term "above" can include both orientations "above" and "below". The device can also be positioned in other different ways (rotating by 90 degrees or in another orientation), and the spatially relative description used herein is explained accordingly.

In addition, it should be noted that using terms such as "first-stage" and "second-stage" to define components is only for the convenience of distinguishing the corresponding components. Unless otherwise stated, the foregoing words have no special meaning and therefore cannot be understood as a limitation on the protection scope of the present invention.

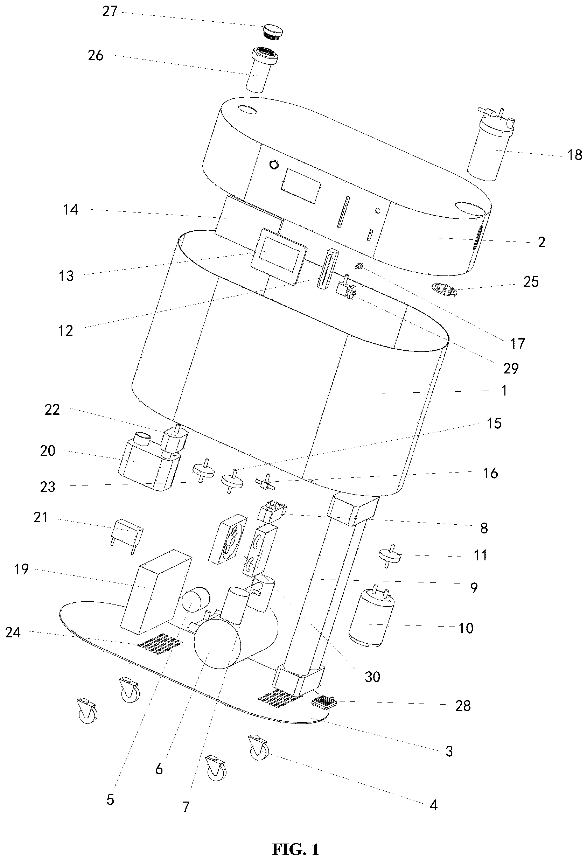

As shown in FIG. 1, the present invention provides an oxyhydrogen preparation device capable of adjusting hydrogen content, including a housing configured to accommodate an oxygen production device, a hydrogen production device, a control module, and a power supply module, wherein the power supply module is configured to supply power to each said device.

The housing includes a main housing 1, and an upper cover 2 and a bottom cover 3 respectively disposed at an upper end and a lower end of the main housing 1. The upper cover 2 is provided with a water inlet 26 for adding water into the hydrogen production device, and a sealing cover 27 is disposed on the water inlet 26. The upper cover 2 is further inside provided with a humidification bottle 18. The bottom of the humidification bottle 18 is further provided with a lamp plate 25. A part, corresponding to the side of the humidification bottle 18, of the upper cover 2 is provided with a visual window for observing the gas output amount in the humidification bottle.

The upper cover 2 is further provided with a control panel display screen 13 for displaying the operation of the control module 14 and a display window for observing the flow of the flow meter 12.

The bottom cover 3 is provided with multiple rows of gas inlet holes 24 for increasing the air intake volume in the main housing 1. The bottom cover 3 is further provided with casters 4 convenient to move.

The oxygen production device is configured to separate oxygen from other gases in the air and store the separated oxygen for backup supply. The oxygen production device includes an air compressor 6, a condenser 7 connected with the air compressor 6, an adsorption device connected with the condenser 7 and configured to separate the oxygen from other gases, a gas storage tank 10 connected with the adsorption device and configured to store oxygen, and a silencing device connected with a pipeline for outputting other gases. The silencing device is a muffler 28. The adsorption device is an adsorption tower group 9 including at least two adsorption towers. A combined air valve 8 is disposed between the condenser 7 and the adsorption tower group 9 to control gas paths. The adsorption tower group circularly and alternately operates based on the pressure swing adsorption principle, so as to separate oxygen from the air. One side of the condenser 7 is further provided with a heat dissipater 30 configured to dissipate heat from the condenser 7. The heat dissipater 30 may adopt air-cooling heat dissipation.

The hydrogen production device is configured to produce hydrogen or oxyhydrogen for backup supply based on the principle of water electrolysis. The hydrogen production device includes an electrolytic cell 20 and a catalyst electrode (electrolytic stack 21). A gas outlet of hydrogen or oxyhydrogen is disposed on the electrolytic cell 20, and a gas-liquid separator 22 is disposed at the gas outlet of hydrogen or oxyhydrogen. The produced hydrogen or oxyhydrogen passes through the flame arrester 23 after being subjected to multi-stage filtration and drying, and then flows into a T-pipe 16 communicated with the oxygen outlet pipeline.

The control module 14 is configured to control and adjust the flow of the oxygen, detect a concentration of the oxygen, and adjust a flow of the oxyhydrogen and a hydrogen content to a preset range, that is, the gas output amount of the oxyhydrogen is 0.03-7 L/min, of which the hydrogen content accounts for 0%-100%. Oxygen produced by the oxygen production device, passing the check valve 15, converges with the hydrogen or oxyhydrogen produced by the hydrogen production device to the gas outlet 17 of the oxyhydrogen production device through the T-pipe 16, and then is discharged after being humidified by the humidification bottle 18 or directly discharged. It should be noted that when the hydrogen content exceeds the explosion limit (i.e., when the hydrogen content is greater than 4%), in order to further ensure the safety of the device, a flame arrester is further disposed between the T-pipe 16 and the gas outlet 17.

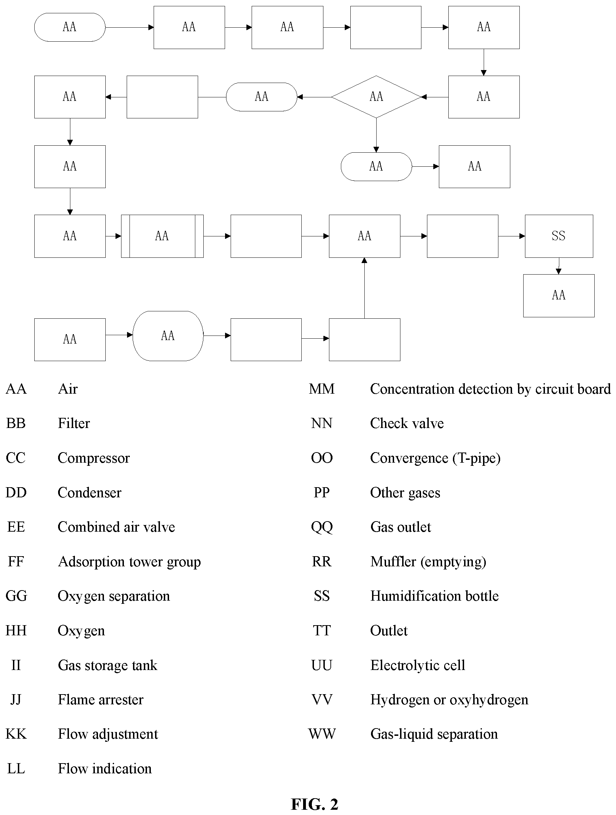

As shown in FIG. 2, the present invention further discloses a using method of the above oxyhydrogen preparation device, specifically including:

For preparing work, open the sealing cover 27, and add water into the electrolytic cell 20 through the water inlet 26. Switch on the oxyhydrogen preparation device, and the oxygen production device and the hydrogen generation start to operate.

For working process of the oxygen production device, the air enters the main housing 1 from the gas inlet holes 24 of the bottom cover 3, and then enters the air compressor 6 for compression after passing the first filter 5, followed by entering the combined air valve 8 after passing the condenser 7. The condenser 7 dissipates heat through the heat dissipater 30. The compressed gas enters the adsorption tower group 9 from the combined air valve 8 for pressure swing adsorption, and the oxygen enters the gas storage tank 10 and the second filter 11 after being separated from other gases, then adjust, controlled by the control module 14, the flow of the oxygen through the flow regulating valve 29 and display the flow of the oxygen by the flow meter 12, the oxygen enters the T-pipe 16 through the check valve 15 after concentration detection, and converges with the hydrogen or oxyhydrogen produced by water electrolysis in the hydrogen production device. Other gases are discharged by the muffler 28.

For working process of the oxygen production device, the electrolytic cell electrolyzes water to produce hydrogen or oxyhydrogen, which enters the flame arrester 23 after passing the gas-liquid separator 22, and then converges with the oxygen in the T-pipe 16. At this time, the flow of the oxyhydrogen and the hydrogen content have been adjusted to a preset range according to the user's needs. The converged gas enters the humidification bottle 18 through the gas outlet 17, and is discharged for use after being humidified or directly discharged for use, which is safe and reliable.

According to the user's needs, a multi-mode gas supply can be realized by independently operating the hydrogen production device or the oxygen production device, or simultaneously operating both the devices.

Finally, it should be noted that the above embodiments are only used to illustrate the technical solutions of the present invention, but not to limit them; although the present invention has been described in detail with reference to the foregoing embodiments, those ordinarily skilled in the art should understand that: the technical solutions described in the foregoing embodiments can still be modified, or some or all of the technical features thereof can be equivalently replaced; and these modifications or replacements do not make the essence of the corresponding technical solutions deviate from the scope of the technical solutions of the embodiments of the present invention.

## Claims

1. An oxyhydrogen preparation device capable of adjusting hydrogen content, comprising:
a housing configured to accommodate an oxygen production device, a hydrogen production device, a control module, and a power supply module,
wherein
the power supply module is configured to supply power to each above device;
the oxygen production device is configured to separate oxygen from air and store oxygen for backup supply;
the hydrogen production device is configured to produce hydrogen or oxyhydrogen for backup supply based on the principle of water electrolysis;
the control module is configured to control and adjust a flow of the oxygen, detect a concentration of the oxygen, and adjust a flow of the oxyhydrogen and a hydrogen content to a preset range; and the oxygen produced by the oxygen production device converges with the hydrogen or the oxyhydrogen produced by the hydrogen production device through a pipeline to a gas outlet of the oxyhydrogen preparation device and then discharged after humidification or directly discharged.

2. The oxyhydrogen preparation device capable of adjusting hydrogen content according to claim 1, wherein the oxygen production device comprises an air compressor, a condenser connected with the air compressor, an adsorption device connected with the condenser and configured to separate the oxygen from the air, a gas storage tank connected with the adsorption device and configured to store oxygen, and a silencing device connected with a pipeline for outputting other gases in the air.

3. The oxyhydrogen preparation device capable of adjusting hydrogen content according to claim 2, wherein the adsorption device is an adsorption tower group comprising at least two adsorption towers, a combined air valve is disposed between the condenser and the adsorption tower group to control gas paths, and the adsorption tower group circularly and alternately operates based on the pressure swing adsorption principle, so as to separate oxygen from the air.

4. The oxyhydrogen preparation device capable of adjusting hydrogen content according to claim 1, wherein the hydrogen production device comprises an electrolytic cell and a catalyst electrode, a gas outlet of hydrogen or oxyhydrogen is disposed on the electrolytic cell, a gas-liquid separator is disposed at the gas outlet of hydrogen or oxyhydrogen, and the produced hydrogen or oxyhydrogen flows into a gas outlet pipeline communicated with an oxygen outlet pipeline after being subjected to multi-stage filtration and drying.

5. The oxyhydrogen preparation device capable of adjusting hydrogen content according to claim 1, wherein the preset range of the flow of the oxyhydrogen is of 0.03-7 L/min, of which the hydrogen content accounts for 0% -100%.

6. The oxyhydrogen preparation device capable of adjusting hydrogen content according to claim 1, wherein the housing comprises a main housing, and an upper cover and a bottom cover are respectively disposed at an upper end and a lower end of the main housing, the upper cover is provided with a water inlet for adding water into the hydrogen production device, a sealing cover is disposed on the water inlet, and the upper cover is further inside provided with a humidification bottle.

7. The oxyhydrogen preparation device capable of adjusting hydrogen content according to claim 6, wherein the upper cover is further provided with a control panel display screen and a flow meter display window.

8. The oxyhydrogen preparation device capable of adjusting hydrogen content according to claim 6, wherein the bottom cover is provided with multiple rows of gas inlet holes, and the bottom cover is further provided with casters convenient to move.

9. The oxyhydrogen preparation device capable of adjusting hydrogen content according to claim 6, wherein a bottom of the humidification bottle is further provided with a lamp plate, and a part, corresponding to a side of the humidification bottle, of the upper cover is provided with a visual window.

10. A using method of the oxyhydrogen preparation device capable of adjusting hydrogen content according to any one of claims 1-9, comprising adding water into the hydrogen production device, switching on the oxyhydrogen preparation device to start the oxygen production device and the hydrogen production device to operate, the air entering the main housing from the gas inlet holes on the bottom cover of the housing, followed by entering the air compressor and then entering the combined air valve through the condenser, then entering the absorption tower group for pressure swing adsorption, after being separated from other gases in the air, oxygen entering the gas storage tank, which converges, after flow adjustment and concentration detection, with the hydrogen or oxyhydrogen produced by electrolysis of water in the hydrogen production device to the gas outlet pipeline, and then is discharged after being humidified by the humidification bottle or directly discharged; and discharging other gases in the air after passing through the silencing device.
